# FASCICULE DE BREVET EUROPEEN

(11) **EP 0 346 232 B1**
(45) Date de publication et mention de la délivrance du brevet: **07.09.1994**
(21) Numéro de dépôt: 89401590.8
(22) Date de dépôt: 08.06.1989
(51) Int. Cl.: G02B 6/26, G02B 26/02, G01M 11/00

(54) **Procédé de raccordement de fibres optiques sans réflexion de Fresnel et système ainsi obtenu, atténuateur optique variable et système utilisant cet atténuateur pour mesurer l'influence du taux de réflexion sur une ligne optique**
Verfahren und System zur Verbindung von Glasfasern ohne Fresnel-Reflexion, veränderlicher optischer Abschwächer und System unter Verwendung desselben zur Messung des Einflusses des Reflexionsgrads auf eine optische Uebertragungsstrecke
Process and system for joining optical fibres without Fresnel-reflection, variable optical attenuator and system, using the same for measurement of the influence of the reflection-rate on an optical line

(30) Priorité: 10.06.1988 FR 8807788; 22.02.1989 FR 8902290
(43) Date de publication de la demande: 13.12.1989
(73) Titulaire: FRANCE TELECOM, 75015 Paris (FR)
(72) Inventeur: Boscher, Daniel, F-22700 Perros-Guirec (FR); Le Marer, René, F-22730 Trégastel (FR); Perrin, Gabrielle, F-22300 Lannion (FR)
(74) Mandataire: Ahner, Francis

(56) Documents cités:
- EP-A- 0 125 758
- EP-A- 0 171 271
- US-A- 4 519 671
- ELECTRONICS AND COMMUNICATIONS IN JAPAN, vol. 69, no. 1, janvier 1986, pages 94-102, New York, US ; I. Sankawa et al. : "Methods for Reducing the Fresnel-Reflection in an Optical-fiber Connector with Index Matching Material".
- PATENT ABSTRACTS OF JAPAN, vol. 6, no. 70 (P-113)(948), 6 mai 1982 ; & JP-A-57011313
- PATENT ABSTRACTS OF JAPAN, vol. 8, no. 89 (P-270)(1526), 24 avril 1984 ; & JP-A-59005216
- PATENT ABSTRACTS OF JAPAN, vol. 10, no. 22 (P-424)(2079), 28 janvier 1986 ; & JP-A-60175007
- PATENT ABSTRACTS OF JAPAN, vol. 3, no. 82 (E-123), 14 juillet 1979 ; & JP-A-54059950
- ELECTRONICS LETTERS, vol. 22, no. 19, septembre 1986, pages 1011-1013, Stevenage, Herts, GB ; R.W. Tkach et al. : "Spontaneous brillouin scattering for single-mode optical-fibre characterisation".
- PATENT ABSTRACTS OF JAPAN, vol. 10, no. 282 (P-500)(2338), 25 septembre 1986 ; & JP-A-61102604

## Description

La présente invention concerne le domaine des lignes de transmission à fibres optiques et du raccordement de fibres optiques.

La technique classique pour raccorder deux fibres optiques consiste à réaliser un polissage optique très fin de la face terminale de chaque fibre à connecter, puis à aligner et relier les fibres.

Le plus souvent, pour minimiser les pertes, un adaptateur d'indice, dont l'indice est adapté aux fibres utilisées, est placé entre les faces terminales des fibres à connecter, lors de l'étape d'alignement et de liaison (voir document Electronics And Communications in Japan, Vol. 69 n° 1, Janvier 1986 p. 94-102).

Cependant, malgré la présence de l'adaptateur d'indice, les raccordements ainsi obtenus présentent généralement un important pic de rétrodiffusion. Ce pic de rétrodiffusion est très nuisible au fonctionnement de certains composants placés en extrémité des fibres, en particulier des composants utilisés dans les systèmes de communication à hauts débits.

Ce pic peut de plus gêner considérablement le test du raccordement par la méthode dite de rétrodiffusion.

Le document ELECTRONICS AND COMMUNICATIONS in Japan, Vol. 69 n° 1, Janvier 1986, p. 94-102 étudie également l'influence du polissage des faces terminales de fibres optiques sur les pertes par réflexion. Après avoir constaté que le polissage classique des faces terminales de fibres optiques augmente superficiellement l'indice de réfraction, en raison d'une augmentation superficielle de densité, ce document préconise de traiter la couche superficielle ainsi formée présentant une augmentation d'indice de réfraction, à l'aide d'un matériau de faible dureté tel que l'oxyde de cérium.

Par ailleurs le document "PATENT ABSTRACTS OF JAPAN" n° 57 011 313 se préoccupe d'éviter tout endommagement de l'extrémité des fibres lors de l'assemblage du connecteur. Pour cela, il propose de tremper l'extrémité des fibres optiques, placées dans un corps de connecteur en matière plastique, dans de l'acide fluorhydrique par exemple, afin d'attaquer l'extrémité de ces fibres, de telle sorte que celles-ci soient placées en retrait du corps de connecteur.

La présente invention a pour but d'éliminer quasi totalement ce pic de rétrodiffusion.

Ce but est atteint selon la présente invention grâce à un procédé de raccordement bout-à-bout de fibres optiques qui consiste à : i) réaliser un polissage contrôlé assez grossier de la face terminale des fibres à connecter avec un élément de polissage de granulométrie supérieure à 3 µm, puis ii) tremper l'extrémité des fibres ainsi polies grossièrement dans une solution d'acide fluorhydrique concentrée pour obtenir une face terminale (5) craquelée et irriguée, et iii) aligner puis relier les fibres ainsi traitées avec interposition d'un adaptateur d'indice entre lesdites faces terminales.

La présente invention concerne également les systèmes optiques obtenus par la mise en oeuvre du procédé, tels que définis à la revendication 8.

La présente invention concerne également en particulier un atténuateur optique variable et un système utilisant cet atténuateur pour mesurer l'influence du taux de réflexion sur une ligne optique.

De nombreux atténuateurs optiques ont déjà été proposés.

On a proposé par exemple des atténuateurs optiques mettant en oeuvre des cristaux liquides. Ces atténuateurs optiques présentent cependant un taux de réflexion élevé.

On a également proposé des atténuateurs mettant en oeuvre une courbure des fibres. Ces atténuateurs ont l'avantage d'être exempts de réflexion. En revanche, leur dynamique et leur stabilité sont mauvaises.

Les atténuateurs optiques jusqu'ici proposés ne donnent donc pas pleinement satisfaction.

La présente invention a pour but principal de proposer un nouvel atténuateur qui élimine les inconvénients précités.

Ce but est atteint selon l'invention grâce à un atténuateur comprenant :
- deux fibres optiques disposées bout-à-bout, dont les extrémités respectives en regard ont été préalablement traitées par polissage contrôlé assez grossier avec un élément de polissage de granulométrie supérieure à 3 µm puis trempage dans une solution d'acide fluorhydrique concentrée pour obtenir une face terminale craquelée et irriguée;
- un adaptateur d'indice interposé entre les faces terminales des fibres pour éviter toute réflexion de Fresnel; et
- deux éléments support recevant et supportant respectivement lesdites fibres de telle sorte que les extrémités traitées de celles-ci placées en regard ont leur axes parallèles, lesdits deux éléments support étant susceptibles de déplacement relatif contrôlé de façon que les faces terminales des fibres sont en regard selon une aire de recouvrement variable en fonction de la position relative des éléments support .

Selon une caractéristique avantageuse, l'un des éléments support est formé d'une ferrule d'enveloppe externe cylindrique qui possède un alésage excentré apte à recevoir l'une des fibres.

Par ailleurs, l'augmentation des débits en ligne sur les liaisons à fibre optique a fait apparaître la nécessité d'une adaptation d'impédance de la ligne pour éviter les réflexions parasites qui peuvent générer des défauts :
a - par interaction dans les cavités laser,
b - par intermodulation lorsque les réflexions se produisent à plusieurs endroits de la ligne.

Ce problème a donné lieu à de nombreuses recherches en laboratoire et à de nombreuses publications ; on citera par exemple pour ces derniers mois :
(1) - degradation in 6 bits DFB laser... by multiple reflection points J.L. GIMLETT and Al, Bell Communication Research, Electronics letters 31 mars 1988 ;
(2) - Hich return loss optical fiber connectors R. RAO Dorran/3M opto Mai 88 ;
(3) - Reflections from polished single mode Fiber Ends A.F. JUDY ATT fiber and integrated optics vol. 7 Nb1 1988 ;
(4) - A convenient field installable anti-reflection coating... A.W. Lightstone RCA Fiber and Integrated optics vol. 7 Nb3 1988 ;
(5) - High stable insertion - high return loss PT optical... T. SHINTAKER NTT ECOC septembre 1988;
(6) - Reflectance Measurements in light wave systems S.K. DAS ATT Symposium on optical fibers measurement septembre 1988 return loss studies of single-ended single mode fiber;
(7) - V. Shah bell core symposium on optical fiber measurement septembre 1988.

Les résultats obtenus à ce jour pour tenter d'éliminer les inconvénients occasionnés par les réflexions en ligne ne sont pas totalement satisfaisants.

En particulier, on n'a pas su jusqu'ici déterminer quel est le niveau acceptable de réflexion pour une installation.

La présente invention a donc pour but secondaire de proposer un système qui permette précisément de mesurer le niveau de réflexion acceptable.

Ce but est atteint selon l'invention grâce à un système qui comprend un coupleur à deux branches, de rapport de transmission connu, ayant une extrémité d'une première branche couplée à un moyen émetteur, tandis que la seconde branche du coupleur a une première de ses extrémités couplée par l'intermédiaire d'un atténuateur optique du type précité à un moyen réflecteur, et a sa seconde extrémité couplée à un moyen détecteur optique.

Un tel système permet, par commande de l'atténuateur optique, de contrôler le taux de réflexion du signal renvoyé vers le moyen émetteur, de contrôler par conséquent l'influence du signal ainsi réfléchi et donc de déterminer quel est le taux de réflexion acceptable.

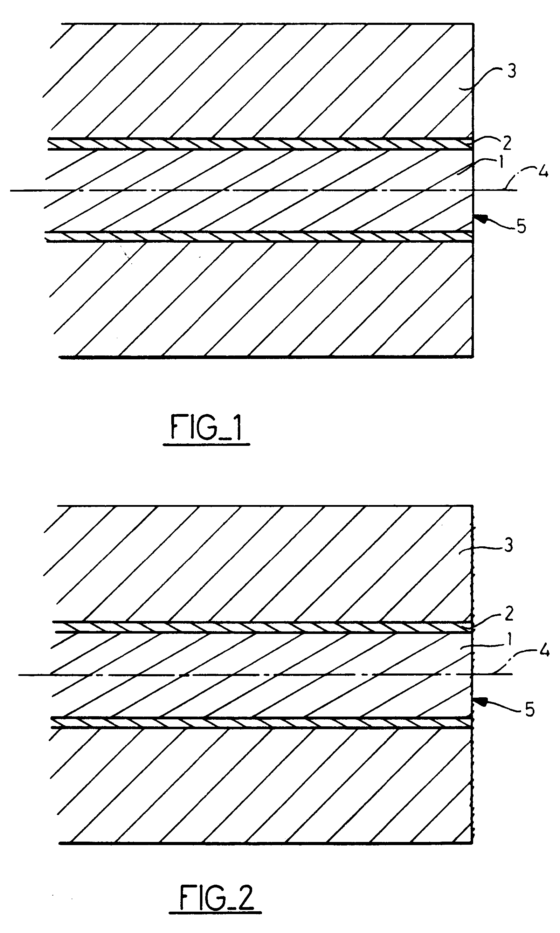

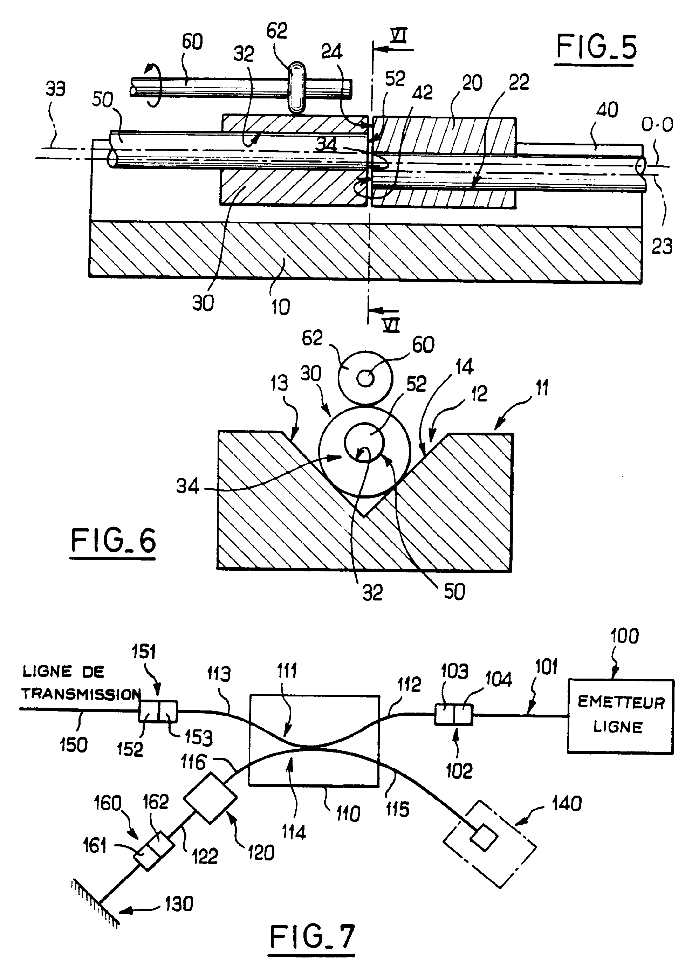

D'autres caractéristiques, buts et avantages de la présente invention apparaîtront à la lecture de la description détaillée qui va suivre, et en regard des dessins annexés, donnés à titre d'exemple non limitatif et sur lesquels :
. Les Figures 1 à 4 représentent différentes étapes successives du procédé de raccordement conforme à la présente invention ;
. La Figure 5 représente une vue schématique en coupe verticale longitudinale d'un dispositif atténuateur optique conforme à la présente invention ;
. La Figure 6 représente une vue en coupe transversale du même dispositif selon un plan de coupe référencé VI-VI sur la Figure 5, et
. La Figure 7 représente une vue générale d'un système conforme à la présente invention permettant de mesurer le taux de réflexion acceptable sur une ligne.

La Figure 1 annexée représente une extrémité d'une fibre optique 1 destinée à être raccordée à une extrémité d'une seconde fibre optique homologue.

De préférence et de façon connue en soi, la fibre optique 1 est noyée dans une résine d'enrobage 2 et centrée dans une ferrule 3, par exemple métallique. L'utilisation d'une telle résine d'enrobage 2 et d'une ferrule 3 facilite la manipulation et l'alignement des fibres optiques mais n'est pas indispensable dans le cadre de la présente invention.

La face terminale de la fibre 1, transversale à son axe longitudinal 4, est référencée 5.

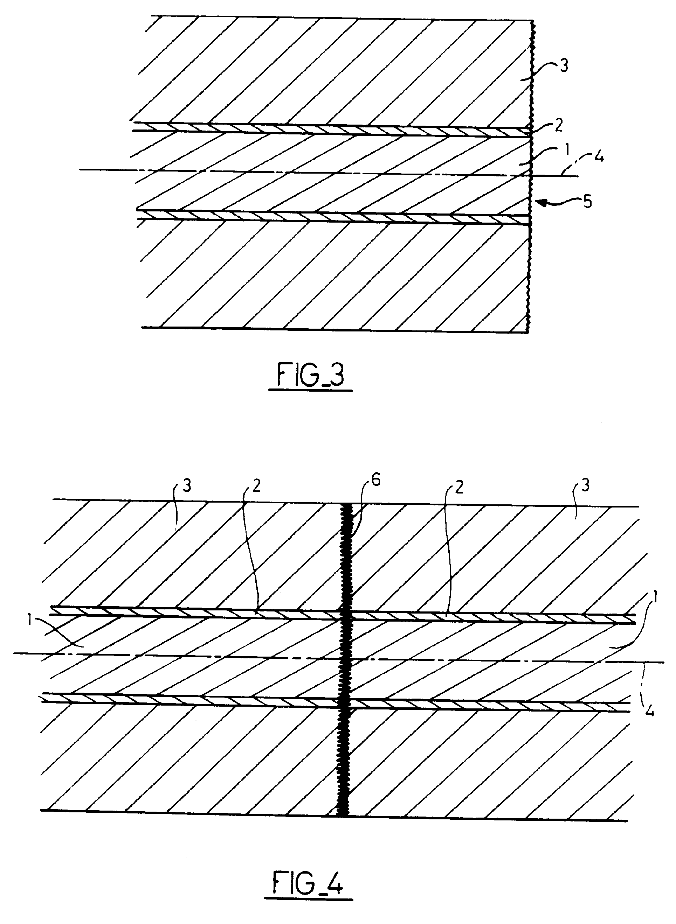

La première étape du procédé conforme à la présente invention consiste à réaliser un polissage contrôlé assez grossier de la face terminale 5 des fibres à connecter afin d'obtenir, comme illustré schématiquement sur la Figure 2 une face terminale 5 granuleuse.

Ce polissage est réalisé de préférence avec des disques de granulométrie supérieure à 3 µm, très avantageusement de granulométrie comprise entre 3 et 12 µm.

La second étape du procédé conforme à la présente invention consiste à soumettre la face terminale 5 des fibres à une attaque chimique.

Cette attaque chimique a pour but de réaliser une face terminale 5 craquelée et irriguée (comme illustré schématiquement sur la Figure 3 annexée). Pour cela la face terminale 5 des fibres est trempée dans une solution d'acide fluorhydrique. Un trempage de la face terminale 5 des fibres dans une solution d'acide fluorhydrique pendant une durée supérieure à 20 secondes, de préférence comprise entre 20 et 30 secondes, avec une concentration d'acide par exemple de 40 %, donne pleinement satisfaction.

Une attaque chimique de la face terminale 5 réalisée dans les conditions précitées permet de générer des craquelures d'une largeur moyenne de l'ordre de 1 à 2 µm.

L'étape ultime du procédé conforme à la présente invention consiste à aligner et à relier deux fibres 1 avec interposition d'un adaptateur d'indice 6 entre les faces terminales 5, comme illustré schématiquement sur la Figure 4 annexée.

L'indice de l'adaptateur 6 est adapté à l'indice des fibres 1.

L'adaptateur d'indice 6 peut être une huile ou une résine polymérisable aux UV. L'huile est actuellement préférée du fait qu'elle présente une meilleure stabilité d'indice.

La présence de craquelures sur les faces terminales 5 permet à l'adaptateur d'indice 6 de mieux mouiller les interfaces 5.

Le processus d'alignement et de liaison proprement dit des fibres est réalisé selon des techniques connues en soi, qui ne seront pas décrites plus en détail par la suite.

On notera cependant qu'au cours de l'opération d'alignement , il y a lieu de veiller à l'alignement angulaire, longitudinal et axial des fibres.

Un raccordement de fibres optiques réalisé conformément à la présente invention permet d'obtenir une réflexion inférieure à -50 dB alors que les performances optimales obtenues précédemment étaient de -38,6 dB.

Le procédé de raccordement conforme à la présente invention est applicable notamment aux connecteurs, raccordements en ligne, coupleurs, multiplexeurs.

On aperçoit sur les Figures 5 et 6 un atténuateur optique qui comprend une embase support 10 et deux ferrules 20, 30, qui reçoivent des fibres optiques respectives 40, 50.

L'embase 10 est formée d'un bloc unitaire muni d'une rainure 12 en V qui débouche sur sa surface supérieure 11. La rainure 12 est délimitée par deux surfaces planes 13, 14, symétriques par rapport à un plan vertical à l'utilisation.

L'ouverture angulaire entre les deux surfaces planes 13, 14, est avantageusement de l'ordre de 90°.

Les deux ferrules 20, 30, sont de structure identique. Elles sont formées chacune d'un cylindre muni d'un alésage 22, 32.

Ces alésages 22, 32, s'étendent parallèlement à l'axe des ferrules 20, 30, mais sont excentrés par rapport à l'enveloppe externe de ferrules.

Les ferrules 20, 30 sont placées dans la rainure 12 avec leur axe longitudinal parallèle au fond de la rainure. L'homme de l'art comprendra aisément que dans la mesure où les ferrules 20, 30, ont des diamètres extérieurs identiques, leurs axes longitudinaux sont coaxiaux.

Sur la Figure 5, on a référence O-O une ligne coïncidant avec les axes centraux des ferrules 20, 30. Par ailleurs, on a référencé respectivement 23 et 33 les axes des alésages 22, 32.

La ferrule 20 est fixée dans la rainure 12 par tout moyen classique approprié, par exemple par collage.

La seconde ferrule 30 est guidée à rotation autour de l'axe O-O dans la rainure 12 et entraînée à rotation autour de cet axe par des moyens appropriés.

De préférence, les ferrules 20, 30 et l'embase 10 sont réalisées en matériau céramique afin de limiter l'usure de ces éléments et de garantir une précision durable au dispositif.

Les fibres 40, 50, sont engagées respectivement dans les alésages 22, 32 des ferrules 20, 30. A cet effet, les alésages 22, 32, sont complémentaires de l'enveloppe externe de ces fibres.

L'homme de l'art comprendra aisément que, en raison de l'excentrement des alésages 22, 32 la rotation de la ferrule 30 autour de l'axe O-O permet de modifier le flux de lumière transmis de la fibre 40 vers la fibre 50 ou inversement.

Les faces terminales 42, 52 des fibres 40, 50 qui affleurent les faces transversales en regard 24, 34 des ferrules sont traitées conformément au procédé décrit précédemment, consistant tout d'abord à réaliser un polissage contrôlé assez grossier de la face terminale des fibres avec un élément de polissage de granulométrie supérieure à 3µm, puis à soumettre l'extrémité des fibres à une attaque chimique pour obtenir une face terminale craquelée et irriguée, et à interposer un adaptateur d'indice entre ces faces terminales pour supprimer toute réflexion de Fresnel.

Les inventeurs ont réalisé des essais sur un dispositif atténuateur du type précédemment décrit comprenant des ferrules 20, 30 présentant un diamètre externe de 2,5 mm, possédant des alésages 22, 32, d'un diamètre de 127 µm, excentrés de 7 à 10 µ pour des fibres monomodes et de 30 à 50 µm pour des fibres multimodes. Un tel atténuateur permet d'obtenir un taux d'atténuation variable entre 3 et 60 dB, sans réflexion parasite.

Les moyens permettant d'entraîner la ferrule 30 à rotation autour de l'axe O-O pourront faire l'objet de nombreux modes de réalisation.

Selon le mode de réalisation particulier, considéré actuellement comme préférentiel, représenté sur les Figures 5 et 6 ces moyens d'entraînement comprennent un tourillon 60 qui porte une courroie torique en caoutchouc 62. Le tourillon 60 s'étend parallèlement à l'axe O-O. La courroie 62 repose sur la périphérie externe de la ferrule 30. Le tourillon 60 peut être entraîné à rotation autour de son axe par tout moyen classique approprié, le cas échéant par l'intermédiaire d'un réducteur.

On a représenté sur la Figure 7 annexée un système conforme à la présente invention permettant de déterminer le taux de réflexion acceptable dans une ligne.

On aperçoit sur la Figure 7, un moyen émetteur 100, un coupleur 110, un atténuateur optique 120, un moyen réflecteur 130 et un moyen détecteur optique 140.

Le coupleur optique 110 est un coupleur à deux branches 111, 114. Il présente de préférence un rapport de transmission 50/50. Le coupleur 110 peut être obtenu, de façon connue en soi, par fusion étirage, ou encore par sciage abrasion.

L'émetteur 100 est couplé à une première extrémité 112 de la première branche 111 par l'intermédiaire d'une fibre optique 101 et d'un connecteur 102. Le connecteur 102 est composé de deux demi-connecteurs 103, 104, traités anti-réflexion. A cette fin, les demi-connecteurs 103, 104 peuvent être du type connecteur poli en biais, ou encore de préférence traités en surface par le procédé décrit précédemment.

La seconde extrémité 113 de la première branche 111 du coupleur est reliée à la ligne de transmission 150 par l'intermédiaire d'un second connecteur 151. Le connecteur 151 est formé de deux demi-connecteurs 152, 153, semblables aux demi-connecteurs 103, 104 précités.

L'une des extrémités 115 de la seconde branche du coupleur 110, qui est adjacente à la première extrémité 112 précitée, est couplée à un détecteur optique 140. Le détecteur 140 a pour fonction de mesurer l'intensité du flux lumineux issu de l'extrémité 115 du coupleur. A cet effet, l'extrémité 115 du coupleur pourra être reliée à un embout taillé en biais placé dans une cellule ou dans une photodiode et associé à une électronique appropriée.

L'autre extrémité 116 de la seconde branche 114 du coupleur, est relié aux moyens réflecteurs 130 par l'intermédiaire du moyen atténuateur 120.

Le moyen réflecteur 130 peut être formé d'un embout poli sur lequel on a déposé une couche mince de matériau réflecteur, par exemple de l'or ou de l'argent.

L'atténuateur optique 120 est du type représenté sur les Figures 5 et 6 annexées et précédemment décrit.

La fibre optique qui permet de relier l'atténuateur optique 120 aux moyens réflecteurs 130 est référencée 122 sur la Figure 7 annexée.

De préférence comme illustré sur cette figure, l'atténuateur optique 120 est relié aux moyens réflecteurs 130 par l'intermédiaire d'un connecteur 160 intercalé sur la fibre optique 122. Le connecteur 160 comprend deux demi-connecteurs 161, 162 semblables aux connecteurs 102, 151 précités, traités anti-réflexion.

Le fonctionnement général du système représenté sur la Figure 7 est le suivant.

Le flux lumineux émis par l'élément 100 et qui arrive sur l'entrée 112 du coupleur 110, par l'intermédiaire du connecteur 102, est divisé en deux flux identiques dirigés respectivement vers les extrémités 113 et 116 du coupleur. La moitié du flux généré par l'émetteur 100 est donc dirigée par l'intermédiaire du connecteur 151 vers la ligne de transmission 150. L'autre moitié du flux généré par l'émetteur 100 est dirigée vers l'atténuateur variable 120. La partie du flux transmise par cet atténuateur 120 atteint le réflecteur 130 par l'intermédiaire du connecteur 160. Ce flux est réfléchi sur le réflecteur 130, passe à nouveau le connecteur 160 et atteint l'atténuateur 120. La partie du flux lumineux qui franchit à nouveau l'atténuateur 120 revient sur l'extrémité 116 du coupleur 110. Le flux réinjecté dans le coupleur 110 est divisé en deux fractions égales dirigées respectivement, d'une part, vers le moyen émetteur 100, d'autre part, vers le moyen détecteur 140.

Ce moyen détecteur 140 permet par conséquent de mesurer directement l'amplitude du signal réfléchi renvoyé vers le moyen émetteur 100, et donc de contrôler un taux simulé de réflexion d'une ligne. Le moyen détecteur 140 reçoit en effet un flux directement identique à celui réinjecté vers le moyen émetteur 100, que ce soit en provenance de l'atténuateur 120 ou de la ligne 150.

En modifiant le taux d'atténuation introduit par l'atténuateur 120 par rotation de la ferrule 30, on peut moduler le taux de réflexion simulé et ainsi déterminé le taux de réflexion acceptable. L'utilisation d'un atténuateur optique du type représenté sur les Figures 5 et 6 précédemment décrit permet d'obtenir un taux de réflexion variable entre -10 dB et -60 dB, avec une perte d'insertion fixe et connue.

On notera que le système représenté sur la Figure 7 annexée peut être utilisé comme atténuateur variable programmable sans réflexion, si l'on connecte le demi-connecteur 162 au demi-connecteur 152. L'atténuation minimale est alors donnée par le taux de couplage du coupleur 110 et sa perte d'insertion, soit environ 4 dB. Le maximum d'atténuation défini par l'élément 120 est égal à l'infini. On remarquera que la sensibilité du système dans la configuration d'atténuation variable qui vient d'être indiquée en variante est le double de la sensibilité dans la configuration en mesure d'un taux de réflexion variable représenté sur la Figure 7. En effet, selon la configuration donnée sur la Figure 7, la lumière traverse deux fois l'atténuateur variable 120, alors qu'elle ne traverse qu'une seule fois cet atténuateur 120 dans la variante de configuration en simple atténuateur.

## Revendications

1. Procédé de raccordement bout-à-bout de fibres optiques, caractérisé par le fait qu'il comprend les étapes consistant à :
i) réaliser un polissage contrôlé assez grossier de la face terminale (5) des fibres (1) à connecter, avec un élément de polissage de granulométrie supérieure à 3 µm, puis
ii) tremper l'extrémité des fibres (1) ainsi polies grossièrement dans une solution d'acide fluorhydrique concentrée, pour obtenir une face terminale (5) craquelée et irriguée et
iii) aligner puis relier les fibres (1) ainsi traitées avec interposition d'un adaptateur d'indice entre lesdites faces terminales.

2. Procédé selon la revendication 1, caractérisé par le fait que l'opération i) de polissage est réalisée avec un élément de polissage de granulométrie comprise entre 3 et 12 µm

3. Procédé selon l'une des revendications 1 ou 2, caractérisé par le fait que l'opération ii) consiste à tremper l'extrémité des fibres dans une solution d'acide fluorhydrique pendant une durée supérieure à 20s.

4. Procédé selon l'une des revendications 1 à 3, caractérisé par le fait que l'opération ii) consiste à tremper l'extrémité des fibres dans une solution d'acide fluorhydrique pendant une durée comprise entre 20 et 30s.

5. Procédé selon l'une des revendications 1 à 4, caractérisé par le fait que l'acide fluorhydrique utilisé à l'étape ii) a une concentration de l'ordre de 40 %.

6. Procédé selon l'une des revendications 1 à 5, caractérisé par le fait que l'adaptateur d'indice (6) est une huile.

7. Procédé selon l'une des revendications 1 à 5, caractérisé par le fait que l'adaptateur d'indice (6) est une résine polymérisable aux UV.

8. Système optique comprenant deux fibres optiques raccordée bout-à-bout, caractérisé par le fait que
- chaque fibre optique (1) possède une face terminale (5) de raccordement craquelée et irriguée, résultant d'un polissage assez grossier avec un élément de polissage de granulométrie supérieure à 3 µm, suivi d'un trempage dans une solution d'acide fluorhydrique concentrée, préalablement au raccordement, et
- un adaptateur d'indice est placé entre les faces terminales (5) des fibres optiques raccordées (1).

9. Système selon la revendication 8, caractérisé par le fait que la face terminale (5) des fibres optiques présente des craquelures de largeur moyenne de l'ordre de 1 à 2 µm après l'étape de trempage dans la solution d'acide fluorhydrique.

10. Atténuateur optique variable, caractérisé par le fait qu'il comprend deux fibres optiques (40, 50) disposées bout-à-bout, dont les extrémités respectives (42, 52) en regard ont été traitées par polissage contrôlé assez grossier avec un élément de polissage de granulométrie supérieure à 3 µm, puis trempage dans une solution d'acide fluorhydrique concentrée pour obtenir une face terminale (5) craquelée et irriguée; un adaptateur d'indice interposé entre les faces terminales (5) des fibres, pour éviter toute réflexion de Fresnel; et, deux éléments support (20, 30) recevant et supportant respectivement lesdites fibres (40, 50) de telle sorte que les extrémités traitées (42, 52) de celles-ci placées en regard ont leurs axes (23, 33) parallèles, lesdits deux éléments support étant susceptibles de déplacement relatif contrôlé de façon que les faces terminales des fibres sont en regard selon une aire de recouvrement variable en fonction de la position relative des éléments support (20, 30).

11. Atténuateur optique variable selon la revendication 10, caractérisé par le fait que l'un des éléments support (30) est formé d'une ferrule d'enveloppe externe cylindrique, qui possède un alésage (32) excentré apte à recevoir l'une des fibres (50).

12. Atténuateur optique variable selon la revendication 11, caractérisé par le fait que la ferrule (30) est associée à un élément (60, 62) d'entraînement en rotation.

13. Atténuateur optique variable selon la revendication 12, caractérisé par le fait que l'élément d'entraînement en rotation comprend un tourillon (60) muni d'une bague torique en caoutchouc (62) qui repose sur la surface externe de la ferrule (30).

14. Atténuateur optique variable selon l'une des revendications 10 à 13, caractérisé par le fait que les deux éléments support (20, 30) sont formés de ferrules identiques d'enveloppe externe cylindrique possédant chacune un alésage excentré (22, 32) apte à recevoir l'une des fibres (40, 50), l'une des ferrules (20) étant fixe, tandis que l'autre (30) est guidée à rotation autour de son axe.

15. Atténuateur optique variable selon l'une des revendications 10 à 14, caractérisé par le fait qu'il comprend une embase (10) munie d'une rainure en V (12) qui reçoit deux ferrules (20, 30) munies d'alésages excentrés (22, 32) qui reçoivent respectivement l'une des fibres (40, 50).

16. Atténuateur optique variable selon l'une des revendications 11 à 15, caractérisé par le fait que chaque ferrule (20, 30) est réalisé en matériau céramique.

17. Atténuateur optique variable selon la revendication 15, caractérisé par le fait que l'embase (10) est réalisée en matériau céramique.

18. Système de mesure de l'influence du taux de réflexion sur une ligne optique, caractérisé par le fait qu'il comprend un coupleur (110) à deux branches (111, 114) de rapport de transmission connu, ayant une extrémité (112) d'une première branche (111) couplée à un moyen émetteur (110) tandis que la second branche (114) du coupleur a une première de ses extrémités (116) couplée, par l'intermédiaire d'un atténuateur optique conforme à l'une des revendications 10 à 17 à un moyen réflecteur (130) et a sa seconde extrémité (115) couplée à un moyen détecteur optique (140).

19. Système selon la revendication 18, caractérisé par le fait que le coupleur (110) est un coupleur de rapport 50/50.

20. Système selon l'une des revendications 18 à 19, caractérisé par le fait que la seconde extrémité (113) de la première branche (111) est reliée à une ligne de transmission (150).

21. Système selon l'une des revendications 18 à 20, caractérisé par le fait qu'il comprend au moins un connecteur (102, 151, 160) formé de demi-connecteurs traités anti-réflexion.

22. Système selon la revendication 21, caractérisé par le fait que les demi-connecteurs (103, 104 ; 152, 153 ; 161, 162) ont été traités par polissage contrôlé assez grossier avec un élément de polissage de granulométrie supérieure à 3 µm puis trempage dans une solution d'acide fluorhydrique concentrée pour obtenir une face terminale (5) craquelée et irriguée, et interposition d'un adaptateur d'indice entre les faces terminales (5) des fibres pour éviter toute réflexion de Fresnel.

## Patentansprüche

1. Verfahren zur Verbindung von Glasfaserenden gekennzeichnet durch folgende Schritte:
i) ziemlich grobes gestenertes Schleifen der Endfläche (5) der zu verbindenden Fasern (1) mit einem Schleifteil mit einer Korngröße von mehr als 3 µm, danach
ii) Eintauchen des Endes der so grob geschliffenen Fasern (1) in eine konzentrierte Fluorwasserstoffsäurelösung zum Erhalten einer rissigen und benetzten Endfläche (5) und
iii) Ausrichten und danach Verbinden der so behandelten Fasern (1) unter Zwischenfügung eines Indexanpassungsmittels zwischen die besagten Endflächen.

2. Verfahren nach Anspruch 1, dadurch gekennzeichnet, daß der Vorgang i) des Schleifens mit einem Schleifteil mit einer Korngröße zwischen 3 und 12 µm durchgeführt wird.

3. Verfahren nach Anspruch 1 oder 2, dadurch gekennzeichnet, daß der Vorgang ii) aus dem Eintauchen des Endes der Fasern in eine Fluorwasserstoffsäurelösung für eine größere Zeitdauer als 20 s besteht.

4. Verfahren nach einem der Ansprüche 1 bis 3, dadurch gekennzeichnet, daß der Vorgang ii) aus dem Eintauchen des Endes der Fasern in einer Fluorwasserstoffsäurelösung für eine Zeitdauer zwischen 20 und 30 s besteht.

5. Verfahren nach einem der Ansprüche 1 bis 4, dadurch gekennzeichnet, daß die im Schritt ii) benutzte Fluorwasserstoffsäure eine Konzentration in der Größenordnung von 40% besitzt.

6. Verfahren nach einem der Ansprüche 1 bis 5, dadurch gekennzeichnet, daß das Indexanpassungsmittel (6) ein Öl ist.

7. Verfahren nach einem der Ansprüche 1 bis 5, dadurch gekennzeichnet, daß das Indexanpassungsmittel (6) ein mit UV polymerisierbares Harz ist.

8. Optisches System mit zwei mit den Enden aneinanderstoßend verbundenen Glasfasern, dadurch gekennzeichnet, daß
- jede Glasfaser (1) eine rissige und benetzte Verbindungs-Endfläche (5) besitzt, die sich aus einem ziemlich groben Schleifen mit einem Schleifteil mit einer Korngröße von mehr als 3 µm, gefolgt von einem Eintauchen in eine konzentrierte Fluorwasserstoffsäurelösung vor dem Verbinden, ergibt, und
- ein Indexanpassungsmittel zwischen die Endflächen (5) der verbundenen Glasfasern (1) plaziert wird.

9. System nach Anspruch 8, dadurch gekennzeichnet, daß die Endfläche (5) der Glasfasern nach dem Schritt des Eintauchens in die Fluorwasserstoffsäurelösung Risse in einer mittleren Größenordnung von 1 bis 2 µm aufweist.

10. Variables optisches Dämpfungsglied, dadurch gekennzeichnet, daß es zwei mit den Enden aneinanderstoßend angeordnete Glasfasern (40, 50) umfaßt, deren entsprechende einander gegenüberliegende Enden (42, 52) durch ziemlich grobes gesteuertes Schleifen mit einem Schleifteil mit einer Korngröße von mehr als 3 µm, danach Eintauchen in eine konzentrierte Fluorwasserstoffsäurelösung zum Erhalten einer rissigen und benetzten Endfläche (5) mit zwischen die Endflächen (5) der Fasern zwischen gefügtem Indexanpassungsmittel zur Vermeidung jeglicher Fresnel-Reflexion behandelt worden sind; und zwei Stützelemente (20, 30), die die besagten Fasern (40, 50) aufnehmen bzw. stützen, so daß die Achsen (23, 33) der einander gegenüber plazierten behandelten Enden (42, 52) parallel sind, wobei die besagten zwei Stützelemente relativ kontrolliert so bewegt werden können, daß sich die Endflächen der Fasern in Abhängigkeit von der relativen Position der Stützelemente (20, 30) entsprechend einer veränderlichen Überlappungsfläche einander gegenüber liegen.

11. Variables optisches Dämpfungsglied nach Anspruch 10, dadurch gekennzeichnet, daß eines der Stützelemente (30) aus einer Hülse mit zylindrischem Außenmantel gebildet ist, die eine zum Aufnehmen einer der Fasern (50) geeignete exzentrische Bohrung (32) besitzt.

12. Variables optisches Dämpfungsglied nach Anspruch 11, dadurch gekennzeichnet, daß die Hülse (30) einem Drehantriebselement (60, 62) zugeordnet ist.

13. Veränderliches optisches Dämpfungsglied nach Anspruch 12, dadurch gekennzeichnet, daß das Drehantriebselement einen Drehzapfen (60) mit einem wulstförmigen Gummitreibriemen (62) umfaßt, der auf einer Außenfläche der Hülse (30) liegt.

14. Veränderliches optisches Dämpfungsglied nach einem der Ansprüche 10 bis 13, dadurch gekennzeichnet, daß die zwei Stützelemente (20, 30) aus gleichartigen Hülsen mit zylindrischem Außenmantel gebildet sind, die jeweils eine zum Aufnehmen einer der Fasern (40, 50) geeignete exzentrische Bohrung (22, 32) besitzen, wobei eine der Hülsen (20) fest angeordnet ist, während die andere (30) um ihre Achse drehbar geführt ist.

15. Veränderliches optisches Dämpfungsglied nach einem der Ansprüche 10 bis 14, dadurch gekennzeichnet, daß es einen Sockel (10) mit einer V-förmigen Rille (12) umfaßt, die zwei Hülsen (20, 30) mit exzentrischen Bohrungen (22, 32) aufnimmt, die jeweils eine der Fasern (40, 50) aufnehmen.

16. Veränderliches optisches Dämpfungsglied nach einem der Ansprüche 11 bis 15, dadurch gekennzeichnet, daß jede Hülse (20, 30) aus keramischem Werkstoff besteht.

17. Veränderliches optisches Dämpfungsglied nach Anspruch 15, dadurch gekennzeichnet, daß der Sockel (10) aus keramischem Werkstoff besteht.

18. System zur Messung des Einflusses des Reflexionsgrades auf eine optische Übertragungsstrecke, dadurch gekennzeichnet, daß es einen Koppler (110) mit zwei Zweigen (111, 114) mit bekanntem Übertragungsverhältnis umfaßt, wobei ein Ende (112) eines ersten Zweiges (111) mit einem Sendermittel (110) verbunden ist, während der zweite Zweig (114) des Kopplers mit einem ersten seiner Enden (116) über ein optisches Dämpfungsglied nach einem der Ansprüche 10 bis 17 mit einem Reflektormittel (130) und mit seinem zweiten Ende (115) mit einem optischen Detektormittel (140) verbunden ist.

19. System nach Anspruch 18, dadurch gekennzeichnet, daß der Koppler (110) ein Koppler mit einem Verhältnis 50/50 ist.

20. System nach einem der Ansprüche 18 bis 19, dadurch gekennzeichnet, daß das zweite Ende (113) des ersten Zweiges (111) mit einer Übertragungsleitung (150) verbunden ist.

21. System nach einem der Ansprüche 18 bis 20, dadurch gekennzeichnet, daß es mindestens einen aus antireflexbehandelten Halbverbindern gebildeten Verbinder (102, 151,160) umfaßt.

22. System nach Anspruch 21, dadurch gekennzeichnet, daß die Halbverbinder (103, 104; 152, 153; 161, 162) mit ziemlich grobem gestenerten Schleifen mit einem Schleifteil mit einer Korngröße von größer als 3 µm und nachfolgendem Eintauchen in eine konzentrierte Fluorwasserstoffsäurelösung zum Erhalten einer rissigen und benetzten Endfläche (5) und der Zwischenfügung eines Indexanpassungsmittels zwischen die Endflächen (5) der Fasern behandelt worden sind, um alle Fresnel-Reflexionen zu vermeiden.

## Claims

1. Method for end to end connecting optical fibres characterised in that it comprises stages consisting of:
i) effecting a controlled rough polishing of the end face (5) of the fibres (1) to be connected, with a polishing element having a grain size greater than 3 µm, then
ii) steeping the ends of the fibres (1) roughly polished in this way in a concentrated solution of hydrofluoric acid, in order to obtain a cracked and irrigated end face (5), and
iii) aligning then connecting the fibres (1) thus treated by interposing an index matching material between said end faces .

2. Method according to claim 1, characterised in that the polishing operation i) is effected with a polishing element with a grain size greater than 3 and 12 µm.

3. Method according to claim 1 or 2, characterised in that the polishing operation ii) consists in steeping the ends of the fibres in a solution of hydrofluoric acid for a period more than 20 seconds.

4. Method according to any one of claims 1 to 3, characterised in that the operation ii) consists in steeping the ends of the fibres in a solution of hydrofluoric acid for a period between and 20 and 30 seconds.

5. Method according to any one of claims 1 to 4, characterised in that the hydrofluoric acid used in stage ii) has a concentration of around 40%.

6. Method according to any one of claims 1 to 5, characterised in that the index matching material (6) is an oil.

7. Method according to any one of claims 1 to 5, characterised in that the index matching material (6) is a UV polymerisable resin.

8. Optical system comprising two optical fibres connected end-to-end, characterized in that;
- each optical fibre (1) has a cracked and irrigated connecting end (5), resulting from a rough polishing with a polishing element having a grain size greater than 3 µm, following a steeping in concentrated solution of hydrofluoric acid prior to connection; and
- an index matching material is placed between the end faces (5) of the connected optical fibres (1).

9. System according to claim 8, characterized in that the end face 5 of the optical fibres has cracks of an average width of 1 to 2 µm after steeping (stage ii)) in the hydrofluoric acid solution.

10. Variable optical attenuator, characterised in that it comprises two optical fibres (40, 50) positioned end-to-end of which the respective ends (42, 52) facing each other have been previously treated by controlled rough polishing with a polishing element having a grain size greater than 3 µm, then steeped in a concentrated solution of hydrofluoric acid in order to obtain a cracked and irrigated end face (5), an index matching material interposed between the end faces (5) of the fibres to prevent any Fresnel reflection; and two supporting elements (20, 30) receiving and supporting respectively said fibres (40, 50) and in such a way that the treated ends (42, 52) of said fibres positioned facing each other, have their axes (23, 33) parallel, said two support elements being capable of controlled relative movement in such a way that the end faces of the fibres are facing each other with an overlap area which varies as a function of the relative position of said supporting elements (20, 30).

11. Variable optical attenuator according to claim 10, characterised in that one of the supporting elements (30) consists of a ferrule with an outer cylindrical casing bored with an eccentric hole (32) capable of receiving one of the fibres (50).

12. Variable optical attenuator according to claim 11, characterised in that the ferrule (30) is associated with a rotating drive element (60, 62).

13. Variable optical attenuator according to claim 12, characterised in that the rotating drive element comprises a journal (60) which carries a toric rubber belt (62) which lies on the external periphery of the ferrule (30).

14. Variable optical attenuator according to any one of claims 10 to 13, characterised in that the two supporting elements (20, 30) are formed from identical ferrules with a cylindrical outer casing bored with an eccentric hole (22, 32) capable of receiving one of the fibres (40, 50), one of the ferrules (20) being fixed while the other (30) is guided in rotation about its axis.

15. Variable optical attenuator according to any one of claims 10 to 14, characterised in that it comprises a base (10) including a V-shaped groove (12) which receives two ferrules (20, 30) bored with eccentric holes (22, 32), each of which receives one of the fibres (40, 50).

16. Variable optical attenuator according to any one of claims 11 to 15, characterised in that each ferrule (20, 30) is made of a ceramic material.

17. Variable attenuator according to claim 15 characterised in that the base (10) is made of a ceramic material.

18. System for measuring the effect of the reflection coefficient on an optical line, characterised in that it comprises a coupler (110) with two branches (111, 114) of known transfer ratio, having one end (112) of the first branch (111) coupled to an emitting means (110) while the second branch (114) of the coupler has one end (116) coupled through the intermediary of an optical attenuator in accordance with any one of claims 10 to 17 to a reflecting means (130) and its second end (115) coupled to an optical detecting means (140).

19. System according to claim 18, characterised in that the coupler (110) is a coupler with a transfer ratio of 50/50.

20. System according to any one of claims 18 to 19 characterised in that the second end (113) of the first branch (111) is linked to a transmission line (150).

21. System according to any one of claims 18 to 20 characterised in that it comprises at least one connector (102, 151, 160) formed from anti-reflection treated half-connectors.

22. System according to claim 21, characterised in that the half-connectors (103, 104, 152, 153, 161, 162) have been treated by controlled rough polishing with a polishing element having a grain size greater than 3 µm, then steeped in a concentrated solution of hydrofluoric acid in order to obtain a cracked and irrigated end face (5), and interposing an index matching material between the end faces (5)- of the fibres to avoid any Fresnel reflection.
